(19)

Europäisches
Patentamt
European
Patent Office
Office européen
des brevets

(11) **EP 3 336 801 A1**

(12) **EUROPEAN PATENT APPLICATION**

(43) Date of publication:
**20.06.2018 Bulletin 2018/25**

(21) Application number: **16306721.8**

(22) Date of filing: **19.12.2016**

(51) Int Cl.:
*G06T 7/00* (2017.01)          *G06T 15/50* (2011.01)
*G06T 7/507* (2017.01)          *G06T 7/514* (2017.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **ROBERT, Philippe**
  **35576 Cesson Sévigné (FR)**
• **JIDDI, Salma**
  **35576 Cesson Sévigné (FR)**
• **LAURENT, Anthony**
  **35576 Cesson Sévigné (FR)**

(74) Representative: **Huchet, Anne et al
TECHNICOLOR
1-5, rue Jeanne d'Arc
92130 Issy-les-Moulineaux (FR)**

(54) **METHOD AND APPARATUS FOR CONSTRUCTING LIGHTING ENVIRONMENT REPRESENTATIONS OF 3D SCENES**

(57)     A synthesis lighting environment representation of a 3D scene is constructed by:
- receiving (10) data representative of at least one first image of the 3D scene taken from at least one location outside the 3D scene;
- receiving (20) data representative at least one second image of the 3D scene taken from at least one filming position inside the 3D scene;
- merging (30) a first lighting environment representation derived from the data representative of the first image(s) and a second lighting environment representation derived from the data representative of the second image(s) into the synthesis lighting environment representation (Rep).

Figure 1

**Description**

## 1. TECHNICAL FIELD

The present disclosure relates to 3D modeling. More specifically, the present disclosure relates to a method for constructing lighting environment representations of 3D scenes. The method can be applied in various Augmented Reality (AR) or Mixed Reality (MR) applications for rendering 3D scenes.

## 2. BACKGROUND

In AR/MR applications, a scene is a location observed by a user through a rendering device such as a tablet or a glass-type HMD (Head-Mounted Display). The scene is illuminated by a set of light sources. It is necessary to model the lighting environment so as to address the AR/MR application for rendering the scene.

Various methods have been proposed for modeling 3D lighting environment of 3D scenes and constructing lighting environment representations of the scenes. Some of the known methods analyze a scene from a RGB camera and detect shadows in the scene from which light source positions are estimated. The quality of the lighting representation of the scene produced by these methods highly depends on the texture of the scene, and the position and intensity of the light sources in the scene. For example, when light sources are vertically above the scene, the shadows are so small that it becomes difficult to estimate the exact positions of the light sources by the shadows. Recently, it has been proposed a method for estimating the 3D locations of light sources based on detecting specular effects in the scene. This method is efficient but requires specular surfaces in the scene. The result of this method also highly depends on the motion of the camera around the scene, because the specular effect of some lights may not be detectable from some observing points. The lighting environment representations obtained by this method may therefore lose some light sources.

Another class of methods estimates the locations of light sources using light probes or fish-eye cameras placed in the 3D scene. The light probes can directly detect the locations of light sources. However, the use of light probe is costly and tedious for an inexperienced user. The fish-eye cameras can directly provide images representing the lighting environment (light sources) of the scene. In order to fit the resulting lighting environment representation to the world coordinate system (WCS) of the scene in an AR/MR application, it is necessary to compute the orientation of the camera. The estimation of the orientation of the camera can be made by asking the user to match points of the scene observed in both the lighting environment representation and an image of the scene taken by another camera posed with respect to the world coordinate system (WCS). Again, it is tedious and costly for an inexperienced user to assist in the estimation of the orientation of the camera. Besides, the fish-eye cameras may not be able to detect some light sources outside its angle of view or obstructed by some objects in a scene. The lighting environment map generated by this method may lose some light sources illuminating the scene.

It is therefore desirable to provide a method for constructing lighting environment representations of 3D scenes in a convenient and less costly way. It is also desirable to construct a more complete lighting environment map without losing some light sources.

## 3. SUMMARY

The present invention makes it possible to construct a more complete lighting environment representation of a 3D scene in a convenient and less costly way.

More specifically, the present invention relates to a method for constructing a synthesis lighting environment representation of a 3D scene. The method comprises:

- obtaining, from at least one first device, data representative of at least one first image of the 3D scene taken from at least one location outside the 3D scene;

- obtaining, from at least one second device, data representative of at least one second image of the 3D scene taken from at least one filming position inside the 3D scene;

- merging a first lighting environment representation derived from said data representative of said at least one first image and a second lighting environment representation derived from said data representative of said at least one second image into said synthesis lighting environment representation.

According to an embodiment of the present invention, at least one of the first device(s) and at least one of the second device(s) are at least one same and unique device.

Advantageously, one of the devices or the unique device is thus exploited for capturing the images successively both inside and outside the 3D scene (in either order).

In an aspect of the present invention, the method further comprises:

- obtaining said at least one filming position,
- generating said first lighting environment representation centered on said at least one filming position from said at least one first image; and
- generating said second lighting environment representation centered on said at least one filming position from said at least one second image.

In an aspect of the present invention, said at least one filming position comprises deriving said at least one filming position from recognizing said at least one first and/or second device position on said at least second image and/or on said at least one first image respectively.

In an aspect of the present invention, said generating of said first lighting environment representation comprises estimating lighting from shadows and/or specularities on said at least one first image.

In an aspect of the present invention, the 3D scene has a center and the first lighting environment representation is centered at the center of the 3D scene.

In an aspect of the present invention, said synthesis lighting environment representation, said first lighting environment representation and said second lighting environment representation are environment maps.

In an aspect of the present invention, at least one of the environment maps is a grayscale image.

In an aspect of the present invention, said merging comprises rotationally matching said first lighting environment representation and said second lighting environment representation.

In an aspect of the present invention, said merging comprises translationally matching said first lighting environment representation and said second lighting environment representation.

In an aspect of the present invention, said merging is based on correlations between said first lighting environment representation and said second lighting environment representation.

In an aspect of the present invention, said merging comprises combining light sources of said first lighting environment representation with light sources of said second lighting environment representation.

The present invention also relates to a method for rendering an Augmented Reality or a Mixed Reality scene. The Augmented Reality or Mixed Reality scene is generated using a synthesis lighting environment representation constructed by any of preceding methods for constructing a synthesis lighting environment representation of a 3D scene.

According to the present invention, there is provided a device for constructing a synthesis lighting environment representation of a 3D scene, comprising at least one processor configured to construct a synthesis lighting environment representation. The at least one processor is configured to:

- receive data representative of at least one first image of the 3D scene taken from at least one location outside the 3D scene;
- receive data representative at least one second image of the 3D scene taken from at least one filming position inside the 3D scene;
- merge a first lighting environment representation derived from said data representative of said at least one first image and a second lighting environment representation derived from said data representative of said at least one second image into said synthesis lighting environment representation.

In an aspect of the present invention, the at least one processor is configured to carry out any of preceding methods for constructing a synthesis lighting environment representation.

According to an embodiment of the present invention, the device for constructing a synthesis lighting environment representation of a 3D scene, comprises means for:

- receiving data representative of at least one first image of the 3D scene taken from at least one location outside the 3D scene;
- receiving data representative at least one second image of the 3D scene taken from at least one filming position inside the 3D scene;
- merging a first lighting environment representation derived from said data representative of said at least one first image and a second lighting environment representation derived from said data representative of said at least one second image into said synthesis lighting environment representation.

In an aspect of the present invention, the device for constructing a synthesis lighting environment representation comprises means for carrying out any of preceding methods for constructing a synthesis lighting environment representation.

According to the present invention, there is provided a computer program product, comprising program code instructions for performing any of the preceding methods for constructing a synthesis lighting environment representation, when the program is executed by a processor.

According to the present invention, there is also provided a non-transitory computer storage medium containing the computer program product.

## 4. BRIEF DESCRIPTION OF THE DRAWINGS

- Figure 1 illustrates a 3D scene and principal steps of a method for constructing a hemispherical synthesis lighting environment representation according to a first embodiment of the disclosure;
- Figure 2 illustrates lighting environment maps derived from images taken from at least one location outside the 3D scene;
- Figure 3 illustrates a 2D lighting environment map derived from images taken from at least one location inside the 3D scene;
- Figure 4 illustrates a hemispherical lighting environment map derived from images taken from at least one location inside the 3D scene;
- Figure 5 illustrates a synthesis hemispherical lighting environment map obtained by merging a first lighting environment shown in Figure 2 and a second lighting environment map shown in Figure 4;

- Figure 6a and 6b illustrate a point P projected from a hemispherical environment map to a 2D environment map;
- Figure 7 illustrates a first 2D lighting environment map derived from images taken from at least one location outside the 3D scene;
- Figure 8 illustrates a synthesis 2D lighting environment map obtained by merging a first 2D lighting environment shown in Figure 8 and a second 2D lighting environment shown in Figure 3;
- Figure 9 illustrates a 3D scene and principal steps of a method for constructing a 3D synthesis lighting environment representation according to a third embodiment of the disclosure;
- Figure 10 shows a modular structure of an electronic device for constructing synthesis lighting environment representations.

## 5. DETAILED DESCRIPTION

### 5.1. General principle

In the present disclosure, the term "lighting environment representation" designates a representation of locations of light sources of a 3D scene. It can also comprise additional information, such as the intensity, color, size and/or shape of the light sources. The lighting environment representation can be stored in any form of data structure. For example, it can be a 2D or 3D environment map on which the 2D or 3D locations of the light sources are recorded. A 2D environment map can be an image (colored or grayscale) in which the locations of the light sources are highlighted according to the intensity and the size of the light sources. A grayscale image can contain essential information of lighting environment (direction, size and intensity of light sources) while it is easy to be processed and requires less memory for storage.

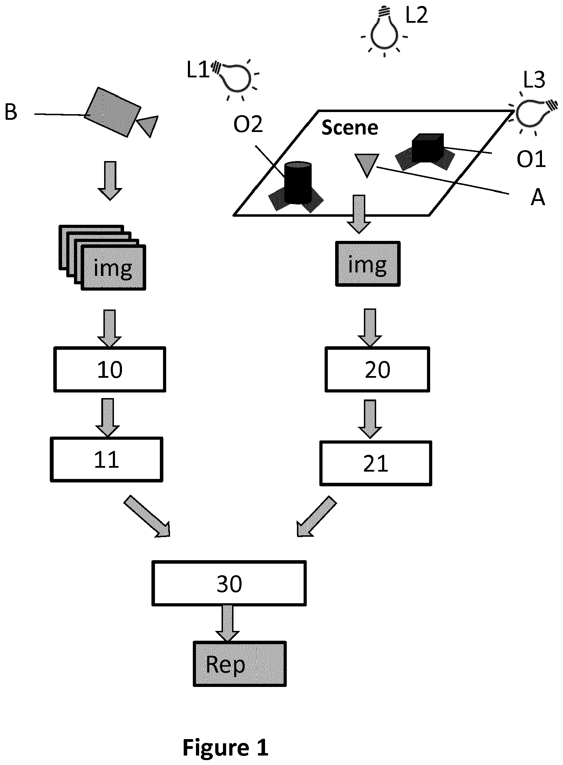

The present disclosure proposes a method for constructing a synthesis lighting environment representation that combines a method based on processing images of the scene taken from outside the scene and a method based on the direct observation of the lighting environment inside the scene. The general principal of the proposed method lies in the merging of a first lighting environment representation derived from data representative of at least one first image taken from at least one position outside the scene by a first device and a second lighting environment representation derived from data representative of at least one second image taken from at least one position inside the scene by a second device, into a synthesis lighting environment representation. The second device can be a camera with a wide range of view (for example, a wide-angle camera of a mobile device or a camera of a mobile device with a cheap wide-angle lens placed on it). The resulting camera can provide at least one image of the environment including light sources of the scene. The first device can also be a camera or any electronic device that comprises a camera. The first and second device can be a same and unique device. In this case, the device can be positioned outside the scene for capturing at least one first image at a first period of time and positioned inside the scene for capturing at least one second image at a second period of time. The proposed method is disclosed in view of figure 1.

**Figure 1** illustrates a 3D scene of an exemplary embodiment of the disclosure. The 3D scene is illuminated by three light sources L1, L2, L3. Objects 01, 02 are disposed in the 3D scene and create some shadows due to the light sources L1 and L3. Light source L2 is located vertically above the scene and far from the scene. In consequence, there is no obvious shadow created in the scene by light source L2. A second device A is positioned at a filming position inside the scene. The filming position can be preferably situated at the center of the scene. A first device B is positioned outside the scene. The first device B can be a moving video camera that captures images of the scene at different locations outside the scene. The first device B can capture images while moving along a circular orbit whose center coincides with the center of the scene. The second device A can be a wide-angle camera and can capture at least one image of the scene from the filming position inside the scene.

More specifically, according to an exemplary embodiment, the method comprises:

- receiving (10), from at least one first device, data representative of at least one first image of the 3D scene taken from at least one location outside the 3D scene;
- receiving (20), from at least one second device, data representative of at least one second image of the 3D scene taken from at least one filming position inside the 3D scene;
- merging (30) a first lighting environment representation derived from said data representative of said at least one first image and a second lighting environment representation derived from said data representative of said at least one second image into said synthesis lighting environment representation.

The first lighting environment representations can be derived from data representative of the images taken by the at least one first device. The data representative of the images can be directly or indirectly (by additional processing) derived from the images. In an exemplary embodiment, the step of generating the first lighting environment representation comprises estimating lighting from shadow and/or specularities detected in the images taken by the at least one first device. The first lighting environment representation can be presented in any form, such as a hemispherical, cubic, 2D or 3D lighting environment map (e.g. set of 3D point lights). The first lighting environment representation in hemispherical, 2D and 3D forms is detailed below in three embodiments of the disclosure.

The second lighting environment representations can be derived from the images taken by the at least one second device positioned in the 3D scene. The second lighting environment representation can also be presented in forms differing from the first lighting environment representation. A 2D lighting environment representation can be directly derived from at least one image taken by one second device positioned inside the scene. Indeed, each image captured by the second device contains the light sources in the view range of the second device. It is therefore not necessary to specifically create a 2D lighting environment representation. If there are at least two cameras positioned in the scene, a 3D lighting environment representation can be generated from at least two images taken respectively by the two second devices positioned in the scene. A hemispherical lighting environment representation can also be generated by projecting the 2D or 3D lighting environment representation onto a hemisphere.

The merging step may further comprise:

- rotationally and/or translationally matching the first lighting environment representation and the second lighting environment representation; and
- combining light sources of the first lighting environment representation with light sources of the second lighting environment representation, delivering the synthesis lighting environment representation.

The orientations of the first lighting environment representation and the second lighting environment representation are important for merging the two environment representations. If the two environment representations have different orientations, the quality of the resulting synthesis lighting environment representation would be affected. This problem can be avoided by asking the user to make the acquisition of the images with caution. For example, a particular 2D marker is placed in the scene and used to define the world coordinate system (WCS) having a coordinate system (x, y, z). Then, the camera placed inside the scene is oriented by the user with respect to the marker so that it allows an easier correspondence between image axes and the axes of the WCS.

The first lighting environment map can be registered with respect to the second lighting environment map. This can improve the quality (accuracy) of the synthesis lighting environment map. More specifically, the first lighting environment representation can be preprocessed to detect highlights (light sources) and both environment maps can have a binary representation to allow comparison and computation of a correlation or matching error. The 3D registration can be limited to the estimation of a 3D rotation (no translation estimated) if either the two maps are described with respect to close (if not same) coordinate systems in the scene or the light sources are so far from the scene that distance between the two coordinate systems has a weak effect. The searched rotation can be estimated by rotating the second lighting environment representation around its center point with a preset of rotations, computing correlation and identifying the one corresponding to the maximal correlation. The searched rotation is 3D in the general case, but if the two coordinate systems share a common plane (e.g. xy plane) the searched rotation is limited to one angle $\phi$ around the normal to the plane (z-axis). A gradient descent algorithm or other iterative method can be used to refine the rotation.

The translational matching of the first and second lighting environment map may be important if the two lighting environment maps are not centered on a same point. The translation can be made using the filming position as a reference point in the two lighting environment maps if easily identified in the images captured by the second device. Otherwise, a preset of translation vectors is introduced in the registration process. The translation is 3D in the general case, but can be limited to 2D if the two coordinate systems share a common plane (e.g. xy plane). The registration process consists then in searching rotation and translation that allow the best fitting between the two lighting environment representations. The various positions take into account the fact that the position of the second device in the scene is not known. The translational matching is optional since the two lighting environment maps are already centered on the filming position.

Thus, the synthesis lighting environment representation combines the lighting information (information of light sources) of at least two (a first and a second) lighting environment representations. It is therefore more complete and more reliable than any of the first and second lighting environment representation. Besides, the method uses images taken from inside and outside the scene for constructing a synthesis lighting environment representation. The first and second devices taking the images can be conventional cameras (camera of a tablet or a smartphone). It is not necessary to use special and costly equipment, or tedious operations such as based on light probes as used in the prior art for constructing a lighting environment representation.

The method according to the present disclosure takes advantage of lighting environment representations derived from images taken from locations inside and outside of a 3D scene, and provides wide lighting environment representations of the 3D scene from various cues plus additional useful information issued from these various cues (surface reflectance, attenuation etc.) for AR/MR applications, without requiring complex or specific equipment nor tedious handling. In fact, using multiple complementary cues avoids a complex acquisition set-up.

The synthesis lighting representation can be constructed off-line before its use in an AR or MR application (in particular if only one device is used for capturing images outside and inside the scene). Alternatively, it can be constructed online, i.e. together with the AR/MR application. In this case, the electronic device (for example, a HMD, a tablet or a computer) on which the AR/MR application runs must be powerful enough for both updating the synthesis lighting environment representation and processing the MR/AR scenario. Furthermore, both processing modules can work at different frequencies, and in any case, a previously constructed (i.e. computed earlier) synthesis lighting environment representation can be considered in a current MR/AR scene. An advantage of considering both processing operations simultaneously is that this mode can take into account the possible variations of lighting during the MR/AR application (at least the lighting environment representation observed by the second device(s) only).

The first and the second devices can be two distinct cameras (or two distinct devices comprising respectively a camera) respectively positioned inside and outside the scene: the at least one image taken by the first device B therefore comprises the second device A, since the second device A is positioned in the scene while the first device B is taking the images. The at least one image taken by the first device B can be processed to detect the filming position (of the second device A) in the scene. This can be carried out for example via stereovision (at least two images of the scene are captured from the first device B at distinct viewpoints or from depth data if the first device B comprises an RGB-D sensor ("D" for depth). This 3D location estimation requires identifying the camera of device A in the image(s), which can be done via recognition.

The method for constructing a synthesis lighting environment representation can therefore comprise:

- obtaining the filming position (of the second device A),
- generating (11) the first lighting environment representation centered on the filming position from data representative of the at least one first image; and
- generating (21) the second lighting environment representation centered on the filming position from data representative of the at least one second image.

As the filming position (3D position) is recovered, the first lighting environment map can be generated with respect to the filming position (centered on the filming position). The filming position of the second device A inside the scene can also be obtained by matching images captured by the two devices A and B. In fact, as the geometric model of the 3D scene is available, by matching such two images, the filming position of the second device A and the location of the first device B in a same reference system (world coordinate system - WCS) can be estimated. The two solutions for obtaining information on the filming position can be combined so as to get a better estimation. The filming position can therefore be derived from existing images taken from positions outside and/or inside the scene. In other words, the step of obtaining the filming position of the second device A may comprise deriving that filming position from recognizing the at least one second device position from the at least one first image.

It is therefore not necessary to take additional images or use special devices, such as RGB-D sensor or distance meter, for detecting the filming position. A first and a second lighting environment representations centered on the filing position can then be generated from the information on the filming position.

In the following, three embodiments are more specifically presented. The three embodiments are based on the previous explanations. The first device B and the second device A are respectively presented as a camera B and a camera A. Some specific characteristics are described as a function of the way the lightning environment representations are generated. The specific characteristics of a first embodiment can be integrated into a second embodiment for delivering a new embodiment which comprises the characteristics extracted from the first embodiment.

### 5.2. First embodiment

In this first embodiment, the first, the second and the synthesis lighting environment representations are presented in form of hemispherical lighting environment maps. The main steps are globally the same as the ones previously presented.

In this embodiment, the step of generating 11 the first lighting environment map comprises:

- estimating lighting from shadows and/or specularities detected in the images taken by camera B; and
- creating a first hemispherical lighting environment map (Rep $H_B$) by projecting the estimated 3D light sources on a hemisphere.

The lighting designates 3D locations and other information (intensity, size, color etc.) of the light sources. The representation of the light sources depends on the method used to detect them and is often point-based or area-based. For example, the shadow-based method generally provides sets of point lights. As to specularity-based methods, they provide either point lights if 3D position is estimated, or patches in a hemispherical map if the specular effects such as highlights in the scene are interpreted e.g. as mirror reflections of the lighting.

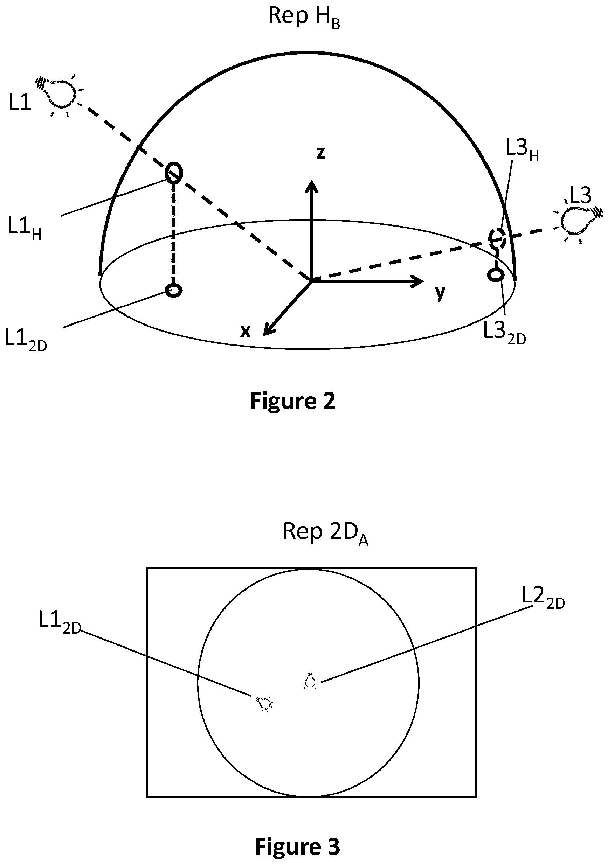

The location of the camera B at the moment of taking each image is recorded together with the images or in a separated file. Therefore, the viewpoints (with respects to the WCS) by which the images were captured are known. The WCS can for example be attached to a particular feature visible and detected in at least one image of the scene. It can also be attached to the filming position of the camera A in the scene if it is known. In the embodiments of the present disclosure, the WCS is attached to the filming position of the camera A that is roughly placed at the center of the scene. Therefore, the 3D locations or directions of the identified light sources can be expressed with respect to the WCS as shown in Figure 2. It can be seen that only light sources L1 and L3 are identified. Light source L2 is not identified because no obvious shadow or specular effect is created by this light source due to its special location vertically above the scene.

From the 3D locations of the identified light sources, a hemispherical lighting environment map (Rep $H_B$) can be created by projecting the estimated 3D light sources to a hemisphere. $L1_H$ and $L3_H$ on the hemisphere are light sources projected on the hemispherical environment map (Rep $H_B$) as shown on Figure 2. The hemispherical lighting environment map is centered at the filming position of camera A. $L1_H$ and $L3_H$ in the hemispherical lighting environment map can also be projected to a 2D plane (2D lighting environment map) as shown by $L1_{2D}$ and $L3_{2D}$. The 2D lighting environment map will be discussed in the second embodiment.

The second hemispherical lighting environment map can be derived from the images taken by camera A positioned inside the scene as shown in Figure 1. In this embodiment, the step of generating the second lighting environment map comprises:

- creating a two dimensional lighting environment map (Rep $2D_A$) from at least one image captured by the camera A; and
- creating a second hemispherical lighting environment map (Rep $H_A$) from the 2D lighting environment map.

The image captured by the camera can itself constitute the second environment map of the light sources - this is a common representation mode of the hemispherical map. That image can also be transformed by the selection of pixels having an intensity exceeding a threshold, in which case the light sources are generally represented as strong intensity patches in that map. Alternatively, the image can be transformed by reducing such patches to punctual light sources having an intensity and a position induced from patch specificities. If such a patch is expanded, it can then be segmented and represented by several point-based light sources.

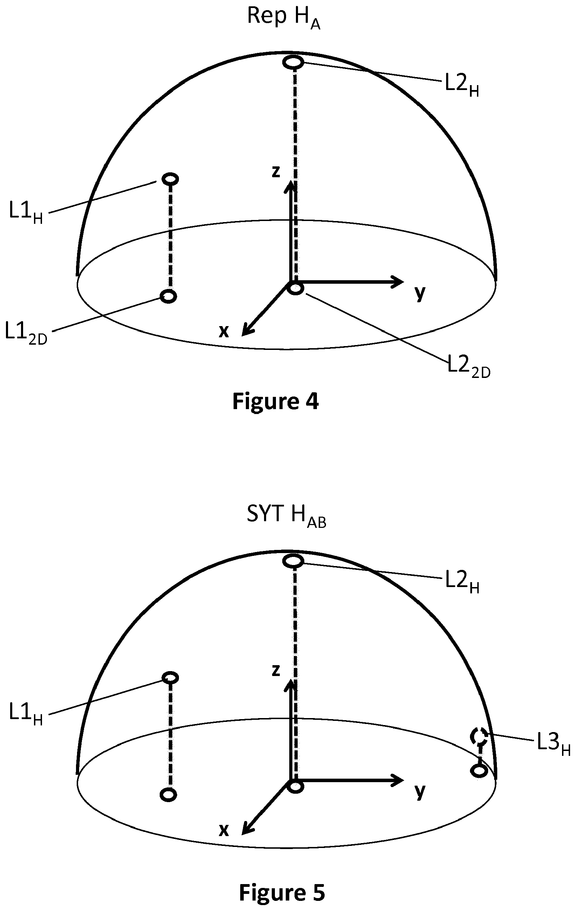

**Figure 3** is a sketch of a two dimensional lighting environment map created from at least one image captured by camera A. It can be seen that only light sources $L1_{2D}$ and $L2_{2D}$ corresponding to light sources L1 and L2 are identified in the 2D lighting environment map, because the location of light L3 is close to the horizontal plan of the scene. It is difficult for camera A with a limited angle of view to capture light source L3 which is outside of the angle of view of camera A. Another possible reason is that some objects (object O1 for example) may have obstructed the view of camera A. By projecting the light sources $L1_{2D}$ and $L2_{2D}$ to a hemisphere, a hemispherical lighting map (Rep $H_A$) is generated as shown in Figure 4.

In this embodiment,_in the step of merging 30, the first hemispherical lighting environment map Rep $H_B$ (shown in **Figure 2**) and the second hemispherical lighting environment map Rep $H_A$ (shown in **Figure 4**) are merged into a synthesis hemispherical lighting environment map.

The step of merging 30 comprises combining light sources of the first hemispherical lighting environment map and light sources of the second hemispherical lighting environment map. A synthesis hemispherical lighting environment map SYT $H_{AB}$ as shown in **Figure 5** can be obtained by the step of combining. It can be seen that the synthesis hemispherical lighting environment map SYT $H_{AB}$ is more complete, since it comprises all the three lighting sources ($L1_H$, $L2_H$, $L3_H$) while each of Rep $H_A$ and Rep $H_B$ comprises only two of the three light sources.

For a light source ($L1_H$) present in a same zone of a predetermined size in both Rep $H_A$ and Rep $H_B$, the combining step will add one light source in the synthesis lighting environment map in the zone. The coordinates of this light source can be computed by averaging the coordinates of the light source $L1_H$ in Rep $H_A$ and Rep $H_B$. For example, in the synthesis hemispherical environment map, the coordinates of light source $L1_H$ can be represented as ($\theta_s$, $\varphi_s$) in which $\theta_s$ represents polar angle

$$\theta_s = \frac{\theta_A + \theta_B}{2},$$

and $\varphi_s$ represents azimuthal angle,

$$\theta_s = \frac{\varphi_A + \varphi_B}{2}.$$

($\theta_A$, $\varphi_A$) and ($\theta_B$, $\varphi_B$) represent respectively the coordinates of $L1_H$ in Rep $H_A$ and Rep $H_B$. The radial distance is not mentioned, since it is constant in the hemispherical environment map (all the light sources are on the hemisphere). It should be noted that the coordinates of the light source in the synthesis environment map can also be obtained by directly selecting the coordinates of this light source in the first or the second environment map in which the light source has a higher intensity value.

The intensity of light source $L1_H$ in SYT $H_{AB}$ can also be obtained by averaging the intensity of this light source in Rep $H_A$ and Rep $H_B$. Alternatively, the intensity of light source $L1_H$ can be obtained by taking the maximum value of this light source in Rep $H_A$ and Rep $H_B$.

For a light source ($L2_H$ or $L3_H$) that is present only in one of the two environment maps (Rep $H_A$ and Rep $H_B$), its coordinates and intensity in the SYT $H_{AB}$ can be the same as its coordinates and intensity in the environment that contains it.

In the present disclosure, a light source is simplified as a point in the environment map, in order to simplify the presentation of the general principles. The skilled person can also model the shape and size of light sources in lighting environment representations so as to get precise representation of the light sources.

In the first embodiment, the lighting environment representation is presented in the form of hemispherical lighting environment maps. The skilled person can use any other possible lighting environment map (for example, a cubic environment map) for representing the lighting environment of the scene. The features disclosed in the first embodiment can also be applied in the other embodiments of the disclosure. If necessary, the skilled person can obviously modify these features so as to make them adapted to other types of environment representations.

### 5.3. Second embodiment

In the second embodiment, the 3D scene is identical to that of the first embodiment as shown in **Figure 1.** The first and the second lighting environment representations as well as the synthesis lighting environment representation are 2D environment maps in the second embodiment.

More specifically, a first 2D lighting environment map (Rep $2D_B$) is generated from data representative of at least one image taken from a position (by camera B) outside the scene and a second 2D lighting environment map (Rep $2D_A$) is generated from the received data representative of at least one image taken from a position (by camera A) inside the scene.

The first 2D lighting representation can be generated by projecting lighting sources $L1_H$ and $L3_H$ in the hemispherical environment map Rep $H_B$ to a 2D plane (2D map) as shown in Figure 2 and explained in the first embodiment.

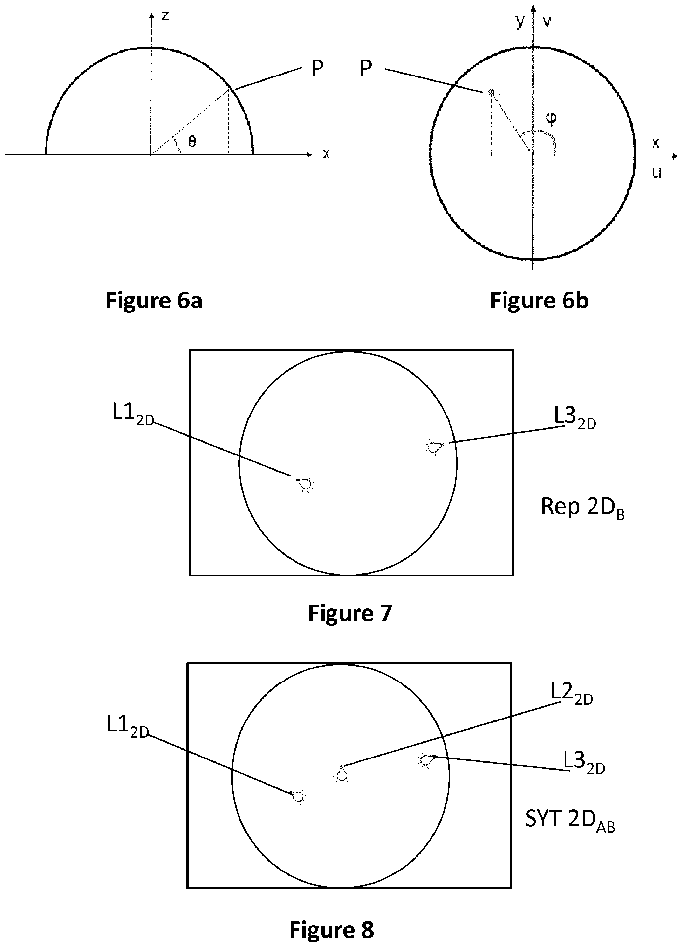

**Figures 6a and 6b** show the projection of a point in a hemispherical environment map to a 2D environment map. A point P ($R$, $\theta$, $\varphi$) in a hemispherical environment map ($\theta$ represents polar angle and $\varphi$ represents azimuthal angle, R is the radius of the hemisphere) can be projected to a 2D environment map using the following equations:

$$\begin{cases} u = R \times cos\theta \times \cos\varphi + u_0 \\ v = R \times cos\theta \times \sin\varphi + v_0 \end{cases}$$

In the above equations, (u,v) is the coordinates of the point P projected into the 2D environment map. The coordinates ($u_0$, $v_0$) correspond to the center of the hemispherical environment map in the 2D environment map. When the hemispherical environment map is centered at the filming point of camera A, the coordinate origin of the hemispherical environment map coincides with the coordinate origin of the 2D environment map ($u_0 = v_0 = 0$). By implementing the projection, the first 2D lighting environment map is obtained as shown in **Figure 8.**

The second 2D lighting environment map can be generated directly from at least one image taken by camera A inside the scene. Indeed, the images captured by camera A inside the scene comprise light sources in the 2D plane of the images. The second 2D lighting environment shown in **Figure 3 has** been explained in detail in the first embodiment.

By merging the first 2D lighting environment map shown in **Figure 7** and the second 2D lighting environment shown in **Figure 3,** a synthesis 2D lighting environment map is obtained as shown in **Figure 8.**

The step of merging in the second embodiment is essentially the same as the step of merging disclosed in the first embodiment, except for the fact that the coordinates of light sources are cartesian in the second embodiment. Light source $L1_{2D}$ appears in both the first and the second 2D lighting environment maps. Its coordinates ($u$, $v$) in the synthesis lighting environment map can be obtained by the following equation:

$$(u, v) = (\frac{u_A + u_b}{2}, \frac{v_A + v_B}{2})$$

In the above equation, ($u_A$, $v_A$) and ($u_B$, $v_B$) represent the coordinates of light source $L1_{2D}$ respectively in the second and the first 2D lighting environment map. It should be noted that the coordinates of the light source $L1_{2D}$ in the synthesis environment map can also be obtained by directly selecting the coordinates of this light source in the first or second environment map in which the light source has a higher intensity value.

The intensity of light source $L1_{2D}$ in SYT $2D_{AB}$ can also be obtained by averaging the intensity of this light source in Rep $2D_A$ and Rep $2D_B$. Alternatively, the intensity of light source $L1_H$ in SYT $2D_{AB}$ can also be obtained by averaging the intensity of this light source in Rep $H_A$ and Rep $H_B$. Alternatively, the intensity of light source $L1_{2D}$ can be obtained by selecting the maximum value of this light source in Rep $2D_A$ and Rep $2D_B$.

For a light source ($L2_{2D}$ or $L3_{2D}$) that is present only in one of the two environment maps (Rep $2D_A$ and Rep $2D_B$), its coordinates and intensity in SYT $2D_{AB}$ can be the same as its coordinates and intensity in the environment map that contains it.

The use of 2D environment maps is particularly adapted in the following context. On one hand, the image captured by the "inner" camera (camera A) can itself constitute the second environment map of the light sources. That image can also be transformed by the selection of pixels having an intensity exceeding a threshold, in which case the light sources are generally represented as strong intensity patches in that map. On the other hand, in the context of specularity-based analysis, images of camera B can be processed to detect highlights in the surfaces, these highlights are interpreted as 'mirror' reflections of lights on specular surfaces. From these reflections, bundles of 3D vectors that indicate the directions of lights can be derived. These data can be naturally represented in a hemispherical map or a 2D environment map. This map can thus contain patches of pixels corresponding to area lights as in the first map. Then these two environment maps can be merged as described previously on a pixel basis.

### 5.4. Third embodiment

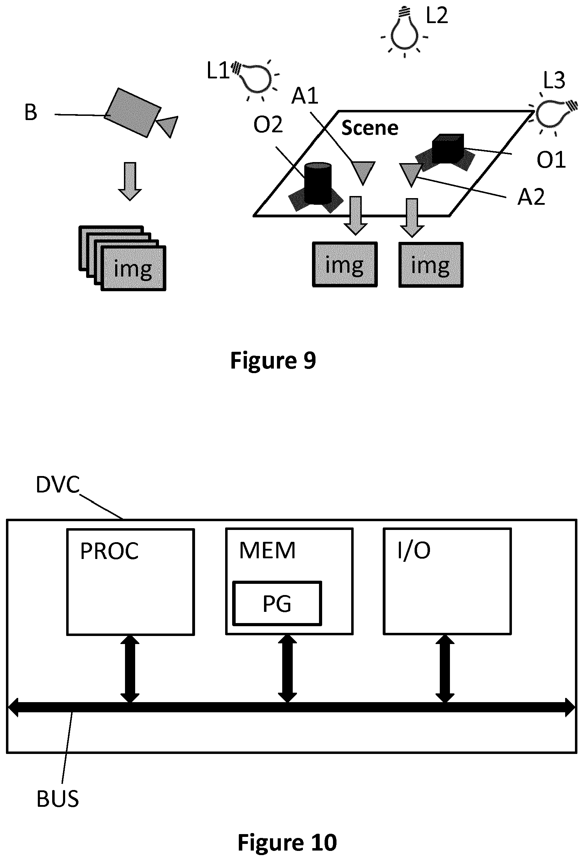

**Figure 9** illustrates a 3D scene and principle steps of a method for constructing a synthesis 3D environment map according to a third embodiment. In the third embodiment, the first, second and synthesis lighting environment representations are extended to three-dimensional level.

By analyzing (processing) the images taken from outside the scene by camera B, 3D position estimates of light sources of the scene can be obtained. A first 3D lighting environment map (Rep 3D$_B$) can be generated from data representative of images taken from outside the scene. The generation of the 3D lighting environment map Rep 3D$_B$ has already been discussed in the first embodiment with **Figure 2.** As shown in **Figure 2,** 3D positions of light sources L1 and L3 are present in a 3D lighting environment map.

In the first and second embodiments, the at least one second image is obtained by camera A placed in a filming position in the scene. In the third embodiment, two "inner" cameras A1 and A2 are placed in the scene. The two "inner" cameras observe the lighting environment of the scene from two distinct positions inside the scene. Using stereovision techniques, the images are matched and a 3D lighting representation can be built. A second 3D lighting environment map Rep 3D$_A$ is therefore generated from the received data representative of at least one image taken by a first inner camera A1 and at least one image taken by a second inner camera A2.

The first and second 3D lighting environment maps can then be merged into a synthesis 3D lighting environment map. To help the stereovision and the merging of the 3D environment maps, the two inner cameras A1 and A2 can be detected from the outside camera B. The 3D positions of the two inner cameras A1 and A2 can be estimated from at least two images taken by the outside camera B from distinct viewpoints.

The two distinct 3D environment maps can be described with respect to the WCS that is chosen to correspond to the filming position of one of the two cameras A1 or A2. As already explained, the two 3D environment maps ("outer" and "inner") have to be registered (via 2D or 3D rotation) before fusion.

In the third embodiment, an "outer" camera B and two "inner" cameras A1 and A2, (three in total) are used. Alternatively, only two cameras can be used. The two cameras are first used as inner cameras A1 and A2 for taking images from inside of the scene. Then, one of the two cameras is used as outer camera B to take images from outside of the scene, while the other camera remains in the scene (this latter camera defines the filming position). Finally, two 3D lighting environment maps are generated from the images taken by the two cameras and a synthesis 3D environment map is created by merging the two 3D lighting environment maps Rep 3D$_A$ and Rep 3D$_B$. The camera used as camera B outside the scene is then used for MR/AR application and possibly for continuously updating the first environment map, while the camera in the scene is used to continuously update the second environment map, both the first and second environment maps updates being then continuously merged.

### 5.5. Device

**Figure 10** illustrates the simplified structure of an electronic device DVC for constructing a synthesis lighting environment representation of a 3D scene. The electronic device can be for example a tablet, a HMD, a PC or a Smartphone.

According to an embodiment, the device DVC comprises a processor PROC driven by a computer program PG stored in a memory MEM and implementing a method for constructing a synthesis lighting environment representation. The device DVC comprises also a module I/O controlled by the processing unit PROC for communicating with external devices. The processing unit PROC, the Memory MEM and the I/O module are connected to a bus. The I/O module can be a wired (USB, Ethernet) or wireless (WiFi, Bluetooth®) communication interface. The electronic device may also comprise a camera and can therefore be used for taking images from positions inside and outside the scene.

At initialization, the program code instructions of the computer program PG are for example loaded into a RAM (not shown) and then executed by the processor of the processing unit PROC. The program code instructions, when executed by the processor PROC, implement the steps of any method disclosed in the present disclosure for constructing a synthesis lighting environment representation.

The processor can in particular be configured to:

- receive data representative of at least one first image of the 3D scene taken from at least one location outside the 3D scene;
- receive data representative at least one second image of the 3D scene taken from at least one filming position inside the 3D scene;
- merge a first lighting environment representation derived from said data representative of said at least one first image and a second lighting environment representation derived from said data representative of said at least one second image into said synthesis lighting environment representation.

According to a specific embodiment, a device may be directly built for constructing the synthesis lightning environment. According to this embodiment, the device may comprise:

- means for receiving data representative of at least one first image of the 3D scene taken from at least one location outside the 3D scene;
- means for receiving data representative at least one second image of the 3D scene taken from at least one filming position inside the 3D scene;
- means for merging a first lighting environment representation derived from said data representative of said at least one first image and a second lighting environment representation derived from said data representative of said at least one second image into said synthesis lighting environment representation.

Of course, these devices may also comprise the necessary means and/or configuration for implementing the various characteristics of the methods which have been described previously.

**Claims**

1. Method for constructing a synthesis lighting environment representation of a 3D scene, **characterized in that** said method comprises:

   - obtaining (10), from at least one first device, data representative of at least one first image of the 3D scene taken from at least one location outside the 3D scene;
   - obtaining (20), from at least one second device, data representative of at least one second image of the 3D scene taken from at least one filming position inside the 3D scene;
   - merging (30) a first lighting environment representation derived from said data representative of said at least one first image and a second lighting environment representation derived from said data representative of said at least one second image into said synthesis lighting environment representation.

2. The method according to claim 1, **characterized in that** at least one of said at least one first device and at least one of said second device are at least one same and unique device.

3. The method according to claim 1 or 2, **characterized in that** it further comprises:

   - obtaining said at least one filming position,
   - generating (11) said first lighting environment representation centered on said at least one filming position from said at least one first image; and
   - generating (21) said second lighting environment representation centered on said at least one filming position from said at least one second image.

4. The method according to claim 3, **characterized in that** obtaining said at least one filming position comprises deriving said at least one filming position from recognizing said at least one first and/or second device position on said at least second image and/or on said at least one first image respectively.

5. The method according to claim 3, **characterized in that** said generating of said first lighting environment representation comprises estimating lighting from shadows and/or specularities on said at least one first image.

6. The method according to any of claims 1 to 5, **characterized in that** the 3D scene has a center and **in that** the first lighting environment representation is centered at the center of the 3D scene.

7. The method according to any of claims 1 to 6, **characterized in that** said synthesis lighting environment representation, said first lighting environment representation and said second lighting environment representation are environment maps.

8. The method according to claim 7, **characterized in that** at least one of said environment maps is a grayscale image.

9. The method according to any of claims 1 to 8, **characterized in that** said merging comprises rotationally matching said first lighting environment representation and said second lighting environment representation.

10. The method according to any of claims 1 to 9, **characterized in that** said merging comprises translationally matching said first lighting environment representation and said second lighting environment representation.

11. The method according to any of claims 1 to 10, **characterized in that** said merging is based on correlations between said first lighting environment representation and said second lighting environment representation.

12. The method according to any of claims 1 to 11, **characterized in that** said merging comprises combining light sources of said first lighting environment representation with light sources of said second lighting environment representation.

13. The method for rendering an Augmented Reality or a Mixed Reality scene, **characterized in that** the Augmented Reality or Mixed Reality scene is generated using the synthesis lighting environment representation constructed by the method according to any one of claims 1 to 12.

**14.** A device for constructing a synthesis lighting environment representation of a 3D scene, comprising at least one processor configured to construct a synthesis lighting environment representation, said at least one processor being **characterized in that** it is configured to:

 - receive data representative of at least one first image of the 3D scene taken from at least one location outside the 3D scene;
 - receive data representative at least one second image of the 3D scene taken from at least one filming position inside the 3D scene;
 - merge a first lighting environment representation derived from said data representative of said at least one first image and a second lighting environment representation derived from said data representative of said at least one second image into said synthesis lighting environment representation.

**15.** Computer program product, **characterized in that** it comprises program code instructions for performing the method according to any one of claims 1 to 13, when the program is executed by a processor.

**Figure 1**

Figure 2

Figure 3

Rep H$_A$

**Figure 4**

SYT H$_{AB}$

**Figure 5**

**Figure 6a**

**Figure 6b**

**Figure 7**

**Figure 8**

**Figure 9**

**Figure 10**

Europäisches Patentamt
European Patent Office
Office européen des brevets

## EUROPEAN SEARCH REPORT

Application Number

EP 16 30 6721

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/063168 A1 (THOMSON LICENSING [FR]; BENITEZ ANA BELEN [US]; ZHANG DONG-QING [US];) 29 May 2008 (2008-05-29) * the whole document * | 1-15 | INV. G06T7/00 G06T15/50 G06T7/507 G06T7/514 |
| A | GB 2 465 792 A (SONY CORP [JP]) 2 June 2010 (2010-06-02) * the whole document * | 1-15 | |
| A | POULIN P ET AL: "LIGHTS FROM HIGHLIGHTS AND SHADOWS", PROCEEDINGS OF THE SYMPOSIUM ON INTERACTIVE 3D GRAPHICS. CAMBRIDGE, MA., MAR. 29 - APR. 1, 1992; [PROCEEDINGS OF THE SYMPOSIUM ON INTERACTIVE 3D GRAPHICS], NEW YORK, ACM, US, vol. -, 29 March 1992 (1992-03-29), pages 31-38, XP000308173, | 1-15 | |

TECHNICAL FIELDS SEARCHED (IPC)

G06T

The present search report has been drawn up for all claims

| Place of search | Date of completion of the search | Examiner |
|---|---|---|
| Berlin | 23 June 2017 | Bernas, Yves |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 336 801 A1**

## ANNEX TO THE EUROPEAN SEARCH REPORT
## ON EUROPEAN PATENT APPLICATION NO.

EP 16 30 6721

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2017

| Patent document cited in search report | Publication date | Patent family member(s) | Publication date |
|---|---|---|---|
| WO 2008063168 A1 | 29-05-2008 | CA 2669001 A1<br>CN 101542538 A<br>EP 2089853 A1<br>JP 5026526 B2<br>JP 2010510572 A<br>US 2010049488 A1<br>WO 2008063168 A1 | 29-05-2008<br>23-09-2009<br>19-08-2009<br>12-09-2012<br>02-04-2010<br>25-02-2010<br>29-05-2008 |
| GB 2465792 A | 02-06-2010 | CN 101751672 A<br>GB 2465792 A<br>US 2010134688 A1 | 23-06-2010<br>02-06-2010<br>03-06-2010 |

EPO FORM P0459

For more details about this annex : see Official Journal of the European Patent Office, No. 12/82